# EUROPEAN PATENT SPECIFICATION

(11) **EP 1 423 684 B1**
(45) Date of publication and mention of the grant of the patent: **27.08.2008**
(21) Application number: 02777005.6
(22) Date of filing: 05.09.2002
(51) Int. Cl.: G01N 25/72

(54) **METHOD AND DEVICE FOR THE ANALYSIS OF A FLUID MEDIUM**
VERFAHREN UND VORRICHTUNG ZUR ANALYSE EINES FLUIDISCHEN MEDIUMS
PROCEDE ET DISPOSITIF POUR L'ANALYSE DE MILIEU LIQUIDE

(30) Priority: 05.09.2001 DE 10143517
(43) Date of publication of application: 02.06.2004
(73) Proprietor: HTE Aktiengesellschaft The High Throughput Experimentation Company, 69123 Heidelberg (DE)
(72) Inventor: KLEIN, Jens, 69124 Heidelberg (DE); SCHUNK, Stephan, Andreas, 69115 Heidelberg (DE)
(74) Representative: Ricker, Mathias
(86) International application number: PCT/EP2002/009951
(87) International publication number: WO 2003/023386

(56) References cited:
- WO-A-01/34291
- WO-A-99/34206
- DE-A- 3 519 397
- GB-A- 2 198 845
- US-A- 5 345 213
- VERGA A: "SPACEBORNE AUTORANGING INFRARED VIEWING SYSTEM FOR THERMAL MAPPING OF FLUIDS IN A MICROGRAVITY CONDITION" OPTICAL ENGINEERING, SOC. OF PHOTO-OPTICAL INSTRUMENTATION ENGINEERS. BELLINGHAM, US, vol. 33, no. 1, 1994, pages 125-133, XP000421275 ISSN: 0091-3286

## Description

The present invention relates to a method and a device for analysis of a fluid medium in using an array of microsensors wherein the intensity of the heat radiated by the microsensors is preferably detected externally and decoupled, deviated, and evaluated. Therein, the present invention relates in particular to the detecting of chemical substances in fluid phases.

The main problem of many a sensor technology is the translation of a chemical or physical signal of the sensor into an electrical one. Most often, this is effected by the use of photo-elements (optical → electrical), Piezo crystals (mechanical → electrical) or semi-conductor cells (thermal orcapacitive → electrical).

A very good overview over the current status of the sensor technology is given by WO 00/13004. It is discriminated between chemical sensors, whose principle of deviation is based on the change of electrical properties (e.g. conductivity, resistance or voltage) by contact (e.g. adsorption) of an analyte molecule with the sensor material, and sensors, changing an optical signal into an electrical impulse (e.g. photocell). A further possibility is a chemical-optical "translation" of the signal, such a s used in e.g. pH indicators. By a change of the pH value in a chemical environment, an indicator molecule is changing its color or fluorescence properties; these can simply read out visually.

WO 00/13004 relates to an assembly wherein the amendment of the composition of monomer and co-monomers as well as the addition of other functional molecules (e.g. dyes), inserting into the polymer matrix, may develop and optimize materials with sensor and deviation functionalities. The example of inserting dyes as well as the connection with glass-fiber optics describe the development of a sensor assembly for controlling the pH value. A further example highlights the use of conducting polymer composites, which may enable the direct redirecting of the figure. The problems of conventionally developed sensors, however, appear here in the same way since merely a methodic for accelerated optimization of sensor-analyte interactions by parallel multiple production of various materials is described. This does not describe a new sensor technology.

US 4,246,228 describes the probably oldest assembly of a sensor for the detection of combustible gases. A measuring cell with a glowing wire is connected as an element of a so-called Wheatstone bridge. The measuring cell is filled with the analyte gas. If there is a combustion on the wire, the wire's resistance changes, resulting in a current flow of the Wheatstone circuit. The current flow is proportional to the concentration of the combustible gas (e.g. a hydrocarbon) in the measuring cell. This kind of sensor, however, cannot differentiate between hydrocarbons and hydroxide or carbon monoxide; all molecules are integrally detected.

A further development of the above assembly is, e.g. the US 6,109,095. Here, the sensor element is created by a semi-conductive layer of, e.g., ZnO-Fe₂O₃. This layer serves as a selective catalyst for the oxidation of hydrocarbons (H₂ or CO are not oxidized!) and as a "translator" of the chemical signal into an electrical one by a change of conductibility in said layer which can be recorded by means of two electrodes.

US 5,734,091 describes in analogy to US 6,109,095 the design of a nitrogen oxide sensor. The active phase of the sensor is in this case a Bi₂Sr₂YCu₂O_{8+y}. Again, the active mass is exposed as the upper layer with regard to the analyte; the diverting is performed by contacted semi-conductor layers, positioned there-below.

US 5,945,343 describes, as an example, the functionality of a sensor based on the change of the pH value, using an urea sensor: The ammonia forming on the sensor surface when the urea is dissolving (induced by the urease enzyme immobilized on the surface) deprotones an indicator molecule INDH+ to IND. A change of color (fluorescence detection) is associated with this reaction on the indicator molecule, which is then recorded. The most important challenge therein is the stabile immobilization of enzymes as well as indicator molecules. In the present case, this problem is solved by a multi-layer construction of the sensor.

The core point of US 4,874,500 is the production of a microstructured electrode array, wherein the implementation and contacting is effected from, e.g., the backside of a silicon wafer, divided into fields. Each position can be individually addressed and can selectively be used to detect a component (e.g. in human blood) by means of a cover with a specific sensor layer. By a combination of various sensor materials, a complete analysis of an analyte is possible. The task was obviously defined by diminishing the deviation electrodes and constructing a microstructured wafer system.

WO 00/36410 shows the complex construction of sensor assemblies even more clearly, based on localized diverting electrodes. The high number of sensor materials on the array render in particular signal processing and data management difficult. The whole construction cannot be realized but for complex production techniques of microstructuring (etching and masking techniques).

US 5,788,833, too, describes in detail the construction of electronical circuits for diverting the actual signal; the active sensor layers are variable and can be applied according to the problem.

The disadvantage of known technologies is a complex construction, in particular of the sensor carrier (semi-conductor layers), including the contacting and translation of the sensor signal into an electrical signal as well as the data recording. The main problem therein is the diverting of the electrical signal, proportional to the sensor signal.

With regard to the use of infrared-thermographic methods for testing catalysts, the following documents are to be cited: WO 99/34206, WO 97/32208, US 6,063,633 and WO 98/15813. All four documents show the principle of using thermography as a quick analytic method for testing for catalyst activity. The assembly of the instruments, e.g. of WO 99/34206, however, relates to a basically different function of the camera as well as of the choice of materials in the reactor setup than is the case in the present invention. In the present cases, a large number of possible catalysts is merely tested for their activity. A thermographic method of gas detection, using one catalyst, is described in GB2198845.

Thus, one problem of the present invention was to provide a method and a device, making it possible to detect chemical substances in fluid mediums more effectively as well as to simplify the constructive expense of a measuring apparatus used therefore, and to simultaneously diminish or avoid high background noise when diverting an electrical sensor signal.

Thus, the present invention relates to a method and a device for analyzing a fluid medium, as defined in claims 1 and 6.

Some preferred embodiments are described in the following in accordance with the accompanying drawings:
Fig. 1 a schematic view of the device of the invention;
Fig. 2 a sensor carrier with sensor device consisting of microsensors;
Fig. 3a an exchangeable sensor carrier in the form of a sandwich unit,
Fig. 3b a sensor carrier of Fig. 3a with heating element;
Fig. 4a a sensor carrier with parallel sequencing of microsensors in each row;
Fig. 4b a side view of the sensor carrier of fig. 4a
Fig. 5 a sensor carrier with linear sensor arrangement
Fig. 6 a sensor carrier with integrated multiport valve
Fig.7 a possible arrangement of the inventive device as analysis system for a test reactor
Fig. 8 a microsensor with gradient distribution of the sensor material on the carrier
Fig. 9 an example of the occupancy of a ring-shaped sensor device,
Fig. 10 an infrared picture of acetone,
Fig. 11a, b infrared pictures of cyclohexane with various concentrations,
Fig. 12a, b, c infrared pictures of methanol with various concentrations,
Fig. 13a, b, c infrared pictures of benzaldehyde with various concentrations; and
Fig. 14 an infrared picture of an acetone/methanol mixture.

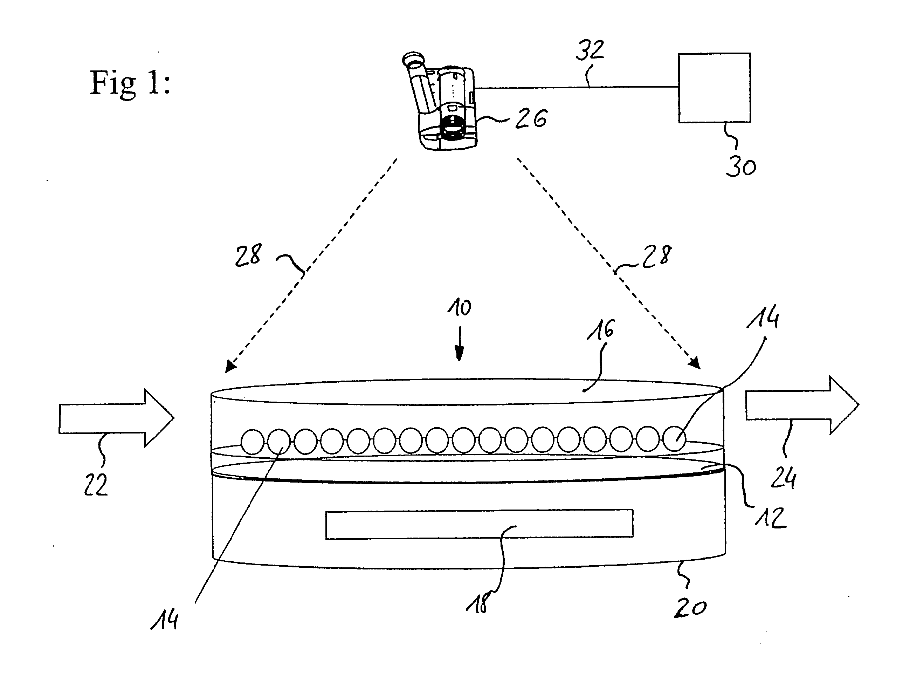

Fig. 1 shows the principle construction of the inventive device 10 with a sensor carrier 12, microsensors 14, an infrared transparent window 16, a heating element 18, a casing 20, a fluid inlet 22, an infrared camera 26 and a data processing facility 30. The arrows in dotted lines under reference number 28 are the field of view of the infrared camera 26.

The infrared camera 26 is preferably connected with the data processing facility 30 via a connection element 32. The connection element 32 may be any of the connection elements known to the person skilled in the art. Preferably, one or more connection cables are used. Alternatively, the connection element may also be an infrared, radio, or other interface without having direct connection, appropriate for the purpose of data transfer.

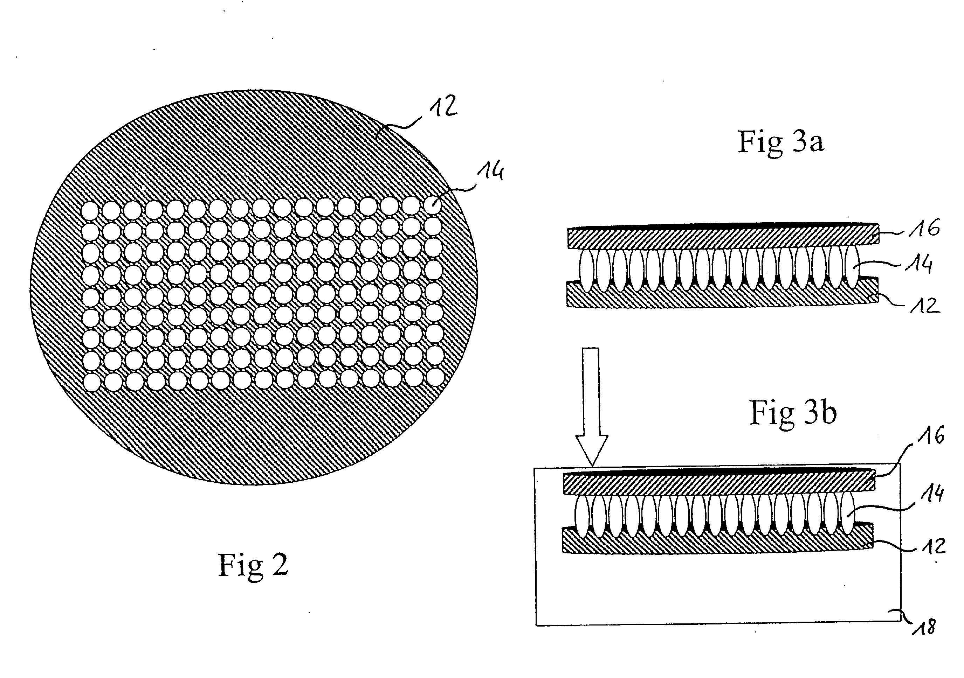

A preferred embodiment of an array of microsensors 14 in a sensor carrier 12 is shown in Fig. 2. The fluid inlet 22 as well as the fluid outlet 24 are arranged vertically to the section plane in this embodiment and are not shown in this representation.

Fig. 2 shows the example of a 17 x 9 matrix of microsensors 14. The size, form and arrangement of the matrix may generally be chosen arbitrarily, wherein two or three-dimensional matrixes can be used.

Fig. 3a shows an exchangeable sensor carrier 12 with microsensors 14 in the form of a sandwich unit with infrared transparent window 16 in the cross-section. The sensor carrier 12 as well as the infrared transparent window 16 are, in this embodiment, preferably made of silicon, e.g. as a silicon wafer. Such sandwich units are particularly appropriate as exchangeable units, thus increasing the functionality as well as the flexibility of the device 10 as per the invention. The microsensors 14 are preferably ceramics balls (carriers, preferably coated with one or more sensor materials).

Optionally, as shown in Fig. 3b, a heating element 18 may be preferably provided below the sensor carrier 12. The heating element 18 makes various operating temperatures of the sensor device possible.

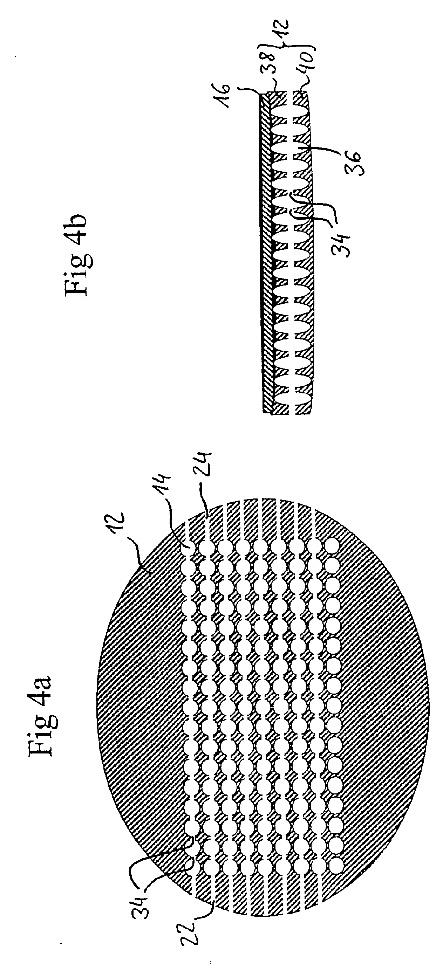

Fig. 4a shows a sensor carrier 12, wherein various or equal microsensors 14 are connected in series via channels 34 while they are connected in parallel within the channel. The inlet of the fluid medium to the microsensors 14 is therein performed via the fluid inlet 22 and thedischarge via the fluid outlet 24.

The embodiment of Fig. 4a is shown in a cross-sectional view in Fig. 4b for better understanding. Fig 4b, however, shows only the sensor carrier 12 with the sections 36 provided for receiving the microsensors 14. The connection channels 34 between the sections 36 are clearly recognizable. In contrast to the previous sensor carriers 12, this is a sensor carrier 12 or two parts with an upper part 38 and a lower part 40. Reference 16 again determines the infrared transparent window, which is preferably provided as silicon wafer or sapphire plate. In particular the lower part 40 can be produce of slate for performing the emissivity correction.

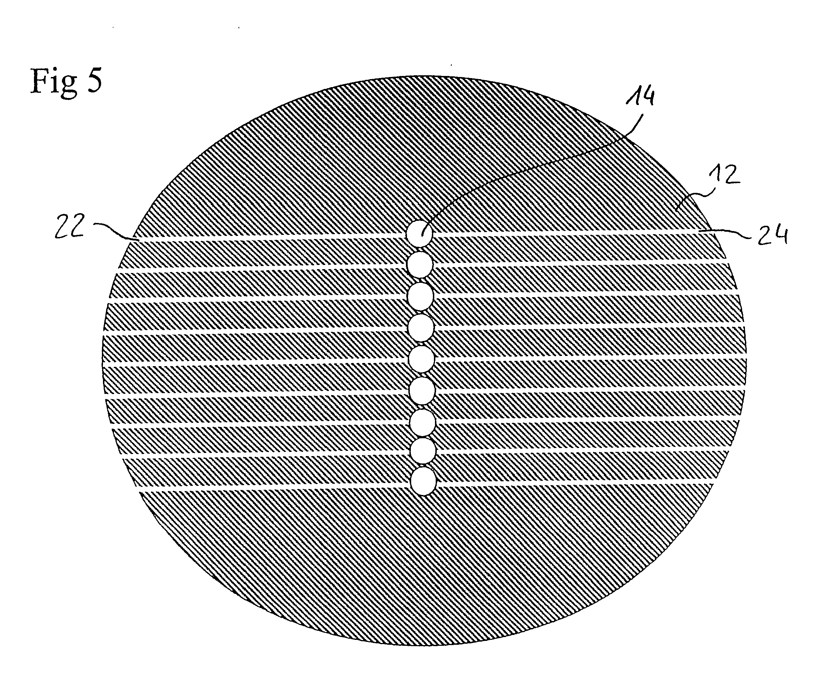

Fig. 5 shows a further possibility of a two-dimensional arrangement of an array of equal or various microsensors 14 on a sensor carrier 12 with fluid inlets 22 and fluid outlets 24.

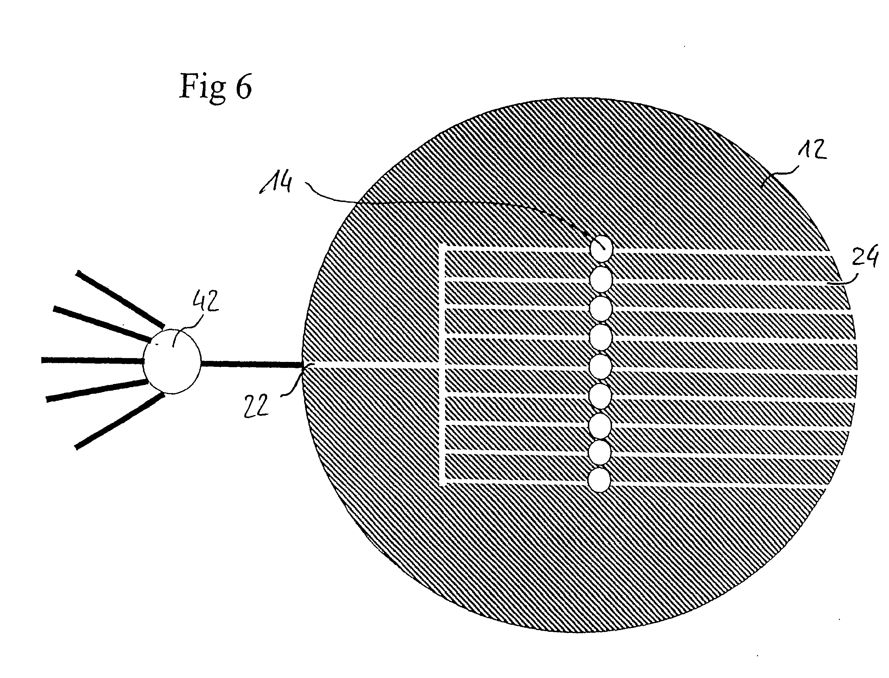

The possibility of a multiport valve circuit in connection with an inventive sensor arrangement is shown in Fig. 6. Therein, various fluid mediums are let in via the fluid inlet 22, controlled/regulated by means of a multiport valve 42 switched in front of the fluid inlet 22. The multiport valve 42 may be an external element, preceding the fluid inlet 22 of the sensor carrier 12, as shown in Fig. 6, or it can be an integral element of the sensor carrier 12.

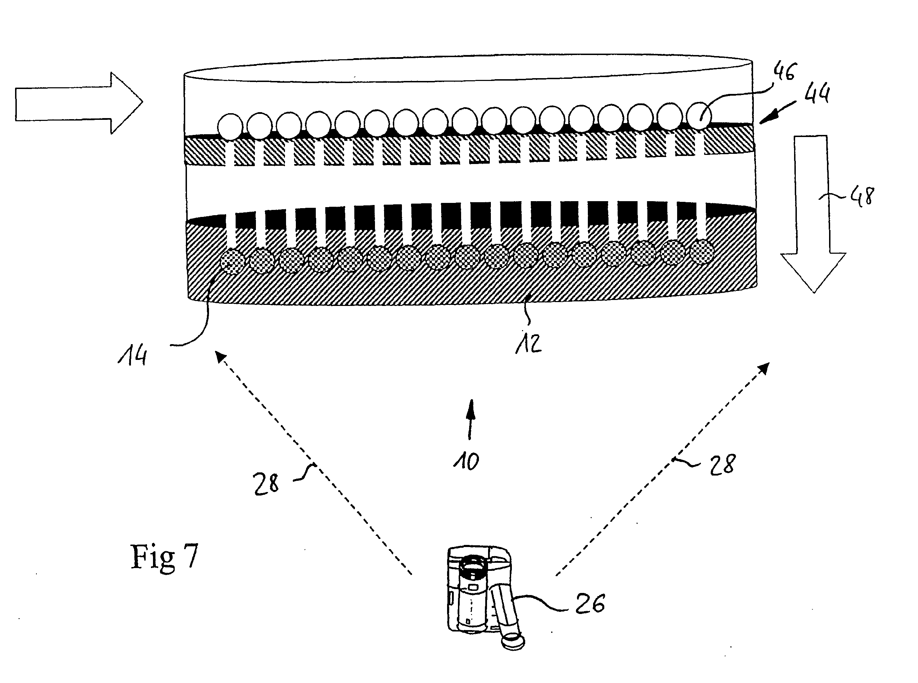

The combination of the inventive device with a device, e.g. a reactor for testing catalyst arrays, the waste-gas of which is to be analyzed, is shown in Fig. 7.

The inventive device 10 is therein arranged below the test reactor 44, wherein the waste-gas apertures of the test reactor 44 are congruent with the fluid inlet apertures 22 of the inventive device 10. This guarantees, that the waste gas 48 is, at least in this embodiment, is conducted only to one microsensor 14 in the sensor carrier 12, originating from an e.g. catalyst 46 to be tested. Alternatively, the waste-gas flow 48 may also be conducted individually, e.g. in using a multiport valve 42 via the whole sensor device, in particular if various microsensors 14 are provided within an array for analyzing various reaction products of a waste-gas flow.

The sensor carriers 12, described in the previous figures, can also be used instead of or in combination with the sensor carrier device shown in figure 7. Generally, the inventive device 10 can be further spaced (spatially separated) from the test reactor 44 wherein appropriate connection elements for conducting the fluid medium to be analyze are then to be provided, which may in turn be heatable.

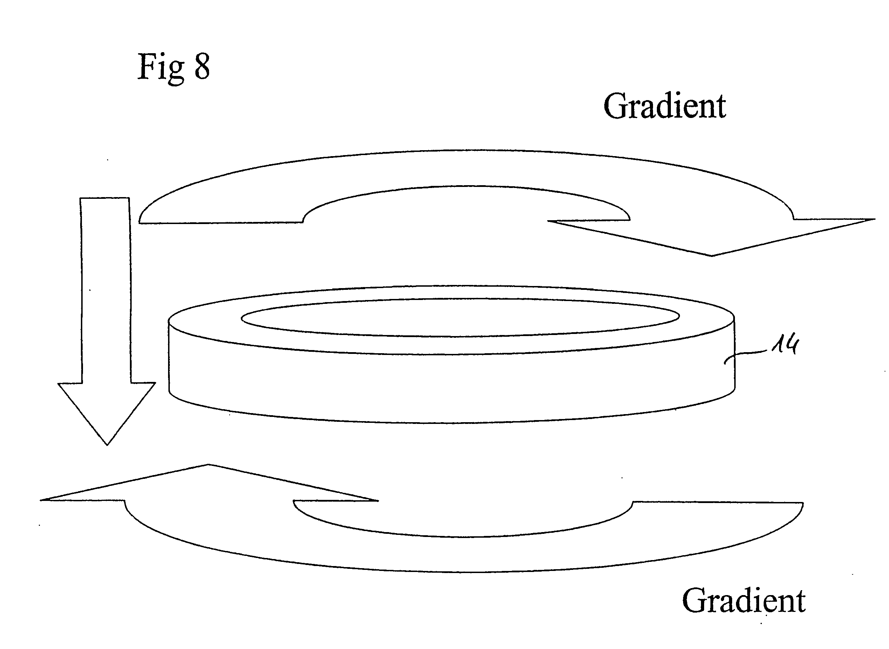

Fig. 8 shows the principle construction of a microsensor 14 wherein the sensor material is applied onto a ring-shaped carrier in the form of a gradient. The carrier can therein be coated on top or bottom with preferably various concentrations of sensor materials. The ring-shaped carrier of this embodiment is preferably porous.

### Example

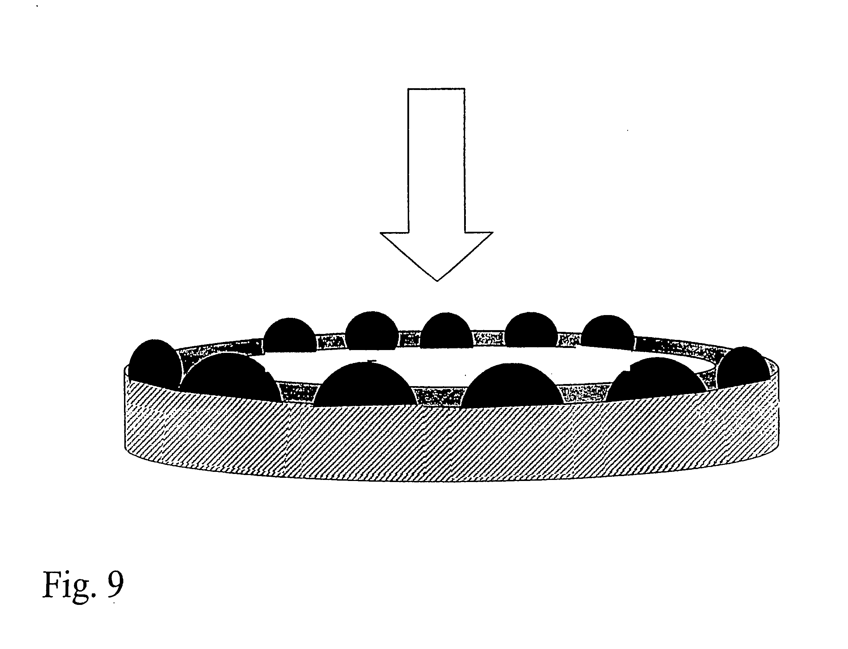

In the following example, 94 various sensor materials for microsensors, or being microsensors themselves, were synthesized. Table 1 shows the composition of each individual sensor material. All were produced by means of impregnating of Al₂O₃ bodies. Therein, the following aqueous metal salt solutions were used: Fig. 9 shows the occupancy of the sensor device with the individual microsensors. The positions B1 and E7 contain pure Al₂O₃ materials in order to generate reference positions for no sensor activity whatsoever (blind values).

Within a heatable sensor arrangement (analogous to DE-A 100 12 847.5 and DE-A 101 32 252.6) the microsensors are applied to the positions A1-H12 (=1-96) of a slate plate as per Table 1 and are tempered to 250°C. An IR camera of the type AIM/Aegais PtSi 256x256 is calibrated to the temperature of the sensor device via an emissivity correction (as per WO 99/34206) so that even small differences of temperature in the sensor activity can be detected with high resolution.

A total gas flow of 800 ml/min N₂ flows homogeneously over all microsensors. Via a liquid dosage, various organic fluids are evaporated in the gas flow in the range of 0.05 ml/min to 0.2 ml/min and conducted over the sensor arrangement.

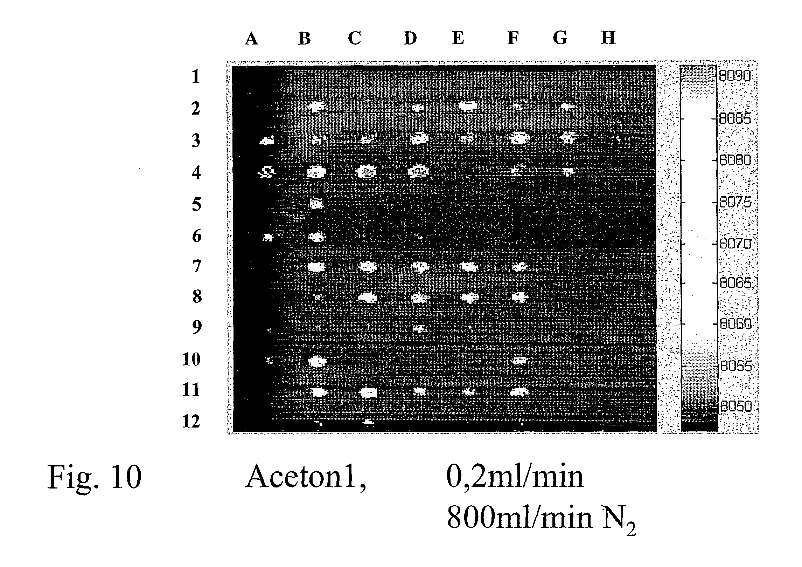

Fig. 10 shows the result of 0.2 ml/min acetone in 800 ml/min N₂. A characteristic pattern is created over the 96 sensor positions A1-H12, wherein the most microsensors on iridium basis show heat emission when contacted with acetone in the rows 1 - 4. The gray scale values on the right side of Fig. 10 show the intensity of heat toning coded in gray values. It has to be taken into account that the scale ranges from dark to light back to dark, that, e.g., the heat emission on position D4 increases in the middle of the microsensors, and does not decrease.

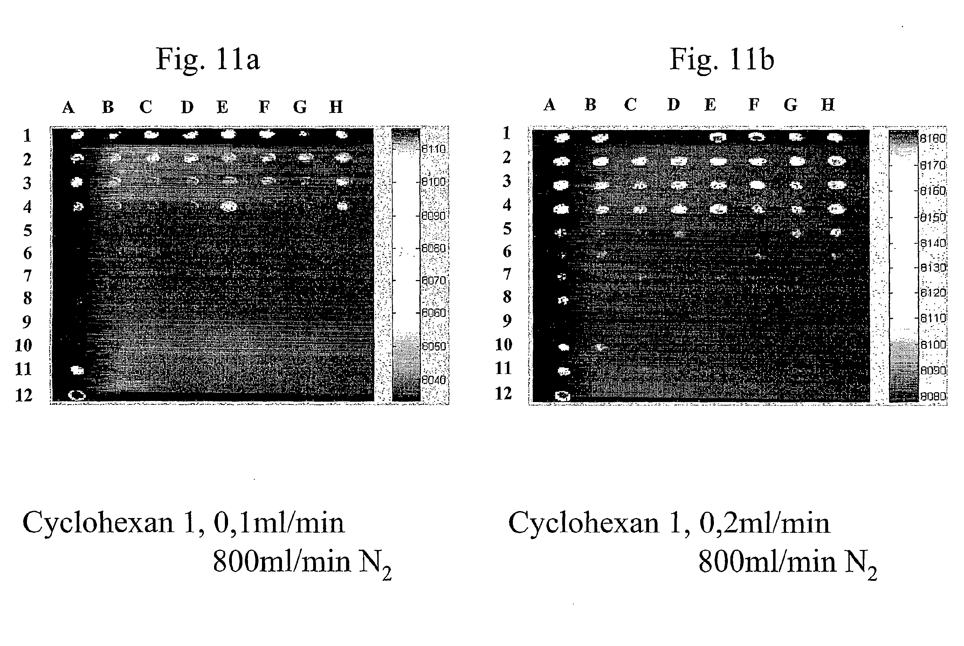

In contrast therewith, Fig. 11 a and 11b show the analogous experiment with two different concentrations of cyclohexane, wherein Fig. 11b shows the analogous experiment conditions to Fig. 10, merely the organic molecule is different. A completely different intensity and response pattern of the microsensors is clearly recognizable. Cyclohexane causes in the rows 5 to 12 merely sensor activity at the column A as well as the position B10. In Fig. 10 (acetone), large areas are ? (rows 7-12). In the same way, the doubling of the concentration of cyclohexane (Fig. 11a and 11b) in the gas flow doubles the intensities of the heat emission via corresponding materials.

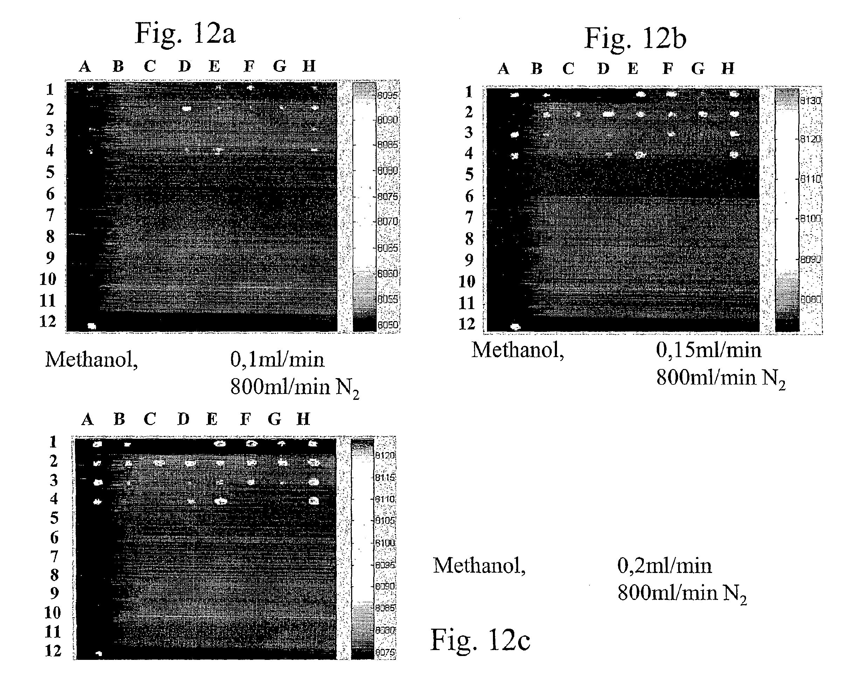

Fig. 12 shows the results for 3 different methanol concentrations within the gas flow, besides a completely new pattern, the dependency of the intensity of the heat tonings from the concentration of the fluid in the gas phase is recognizable again.

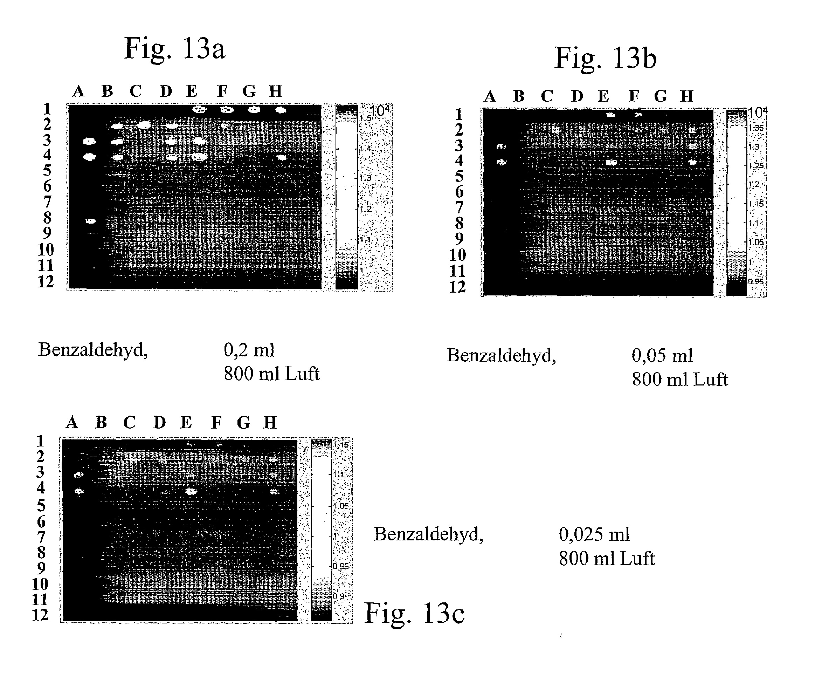

Fig. 13 shows the results when streaming an aromatic aldehyde. Therein, three different concentrations of benzaldehyde are dosed into the gas flow.

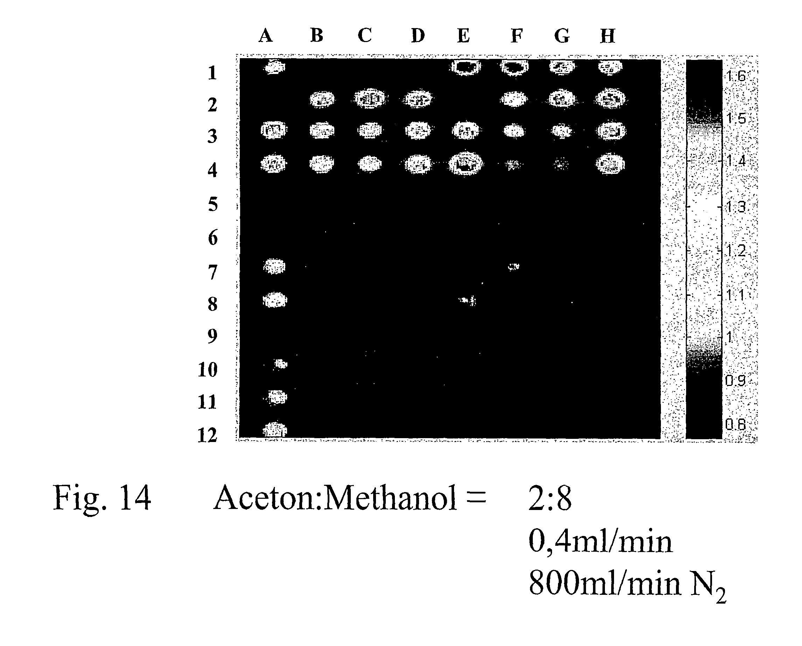

Fig. 14 shows the result when streaming an acetone/methanol mixture.

Even the patterns of cyclohexane (Figs. 11 and 11b) and methanol (Fig. 12a-c), at first appearing similar, they vary different on the microsensors e.g. at the positions G1, C3, B4, C4, F4, and G4. Even if only one position, i.e. one microsensor or sensor material, differs, a qualitative and quantitative detection of the substance is possible.

After calibration of the arrangement, it is thus easily possible to identify substances in mixtures according to their "pattern" or "fingerprint" on the sensor device. This pattern recognition for qualitative detective can also be automated via a software (comparisons via a large library). For quantitative determination, the device is first calibrated with various concentrations of substances or substance mixtures, the determination of the contents is the performed via the evaluation the intensity of the whole pattern or the intensity of at least one characteristic microsensor or sensor material for this substance or for the mixture.

The following two pages show table 1:

| Pos | NR | Ir | Re | Zn | Pt | Pd | Ru | Rh | Ir | Cu | Ag | Au |
|---|---|---|---|---|---|---|---|---|---|---|---|---|
| **A1** | **1** | 3 | 0 | 0 | 3E-04 | 0 | 0 | 0 | 0 | 0 | 0 | 0 |
| **B1** | **2** | 0 | 0 | 0 | 0 | 0 | 0 | 0 | 0 | 0 | 0 | 0 |
| **C1** | **3** | 3 | 0 | 0 | 0 | 0 | 3E-04 | 0 | 0 | 0 | 0 | 0 |
| **D1** | **4** | 3 | 0 | 0 | 0 | 0 | 0 | 3E-04 | 0 | 0 | 0 | 0 |
| **E1** | **5** | 3 | 0 | 0 | 0 | 0 | 0 | 0 | 3E-04 | 0 | 0 | 0 |
| **F1** | **6** | 3 | 0 | 0 | 0 | 0 | 0 | 0 | 0 | 3E-04 | 0 | 0 |
| **G1** | **7** | 3 | 0 | 0 | 0 | 0 | 0 | 0 | 0 | 0 | 3E-04 | 0 |
| **H1** | **8** | 3 | 0 | 0 | 0 | 0 | 0 | 0 | 0 | 0 | 0 | 3E-04 |
| **A2** | **9** | 2,97 | 0 | 0 | 0,03 | 0 | 0 | 0 | 0 | 0 | 0 | 0 |
| **B2** | **10** | 2,97 | 0 | 0 | 0 | 0,03 | 0 | 0 | 0 | 0 | 0 | 0 |
| **C2** | **11** | 2,97 | 0 | 0 | 0 | 0 | 0,03 | 0 | 0 | 0 | 0 | 0 |
| **D2** | **12** | 2,97 | 0 | 0 | 0 | 0 | 0 | 0,03 | 0 | 0 | 0 | 0 |
| **E2** | **13** | 2,97 | 0 | 0 | 0 | 0 | 0 | 0 | 0,03 | 0 | 0 | 0 |
| **F2** | **14** | 2,97 | 0 | 0 | 0 | 0 | 0 | 0 | 0 | 0,03 | 0 | 0 |
| **G2** | 1**5** | 2,97 | 0 | 0 | 0 | 0 | 0 | 0 | 0 | 0 | 0,03 | 0 |
| **H2** | **16** | 2,97 | 0 | 0 | 0 | 0 | 0 | 0 | 0 | 0 | 0 | 0,03 |
| **A3** | **17** | 2,7 | 0 | 0 | 0,3 | 0 | 0 | 0 | 0 | 0 | 0 | 0 |
| **B3** | **18** | 2,7 | 0 | 0 | 0 | 0,3 | 0 | 0 | 0 | 0 | 0 | 0 |
| **C3** | **19** | 2,7 | 0 | 0 | 0 | 0 | 0,3 | 0 | 0 | 0 | 0 | 0 |
| **D3** | **20** | 2,7 | 0 | 0 | 0 | 0 | 0 | 0,3 | 0 | 0 | 0 | 0 |
| **E3** | **21** | 2,7 | 0 | 0 | 0 | 0 | 0 | 0 | 0,3 | 0 | 0 | 0 |
| **F3** | **22** | 2,7 | 0 | 0 | 0 | 0 | 0 | 0 | 0 | 0,3 | 0 | 0 |
| **G3** | **23** | 2,7 | 0 | 0 | 0 | 0 | 0 | 0 | 0 | 0 | 0,3 | 0 |
| **H3** | **24** | 2,7 | 0 | 0 | 0 | 0 | 0 | 0 | 0 | 0 | 0 | 0,3 |
| **A4** | **25** | 2,5 | 0 | 0 | 0,5 | 0 | 0 | 0 | 0 | 0 | 0 | 0 |
| **B4** | **26** | 2,5 | 0 | 0 | 0 | 0,5 | 0 | 0 | 0 | 0 | 0 | 0 |
| **C4** | **27** | 2,5 | 0 | 0 | 0 | 0 | 0,5 | 0 | 0 | 0 | 0 | 0 |
| **D4** | **28** | 2,5 | 0 | 0 | 0 | 0 | 0 | 0,5 | 0 | 0 | 0 | 0 |
| **E4** | **29** | 2,5 | 0 | 0 | 0 | 0 | 0 | 0 | 0,5 | 0 | 0 | 0 |
| **F4** | **30** | 2,5 | 0 | 0 | 0 | 0 | 0 | 0 | 0 | 0,5 | 0 | 0 |
| **G4** | **31** | 2,5 | 0 | 0 | 0 | 0 | 0 | 0 | 0 | 0 | 0,5 | 0 |
| **H4** | **32** | 2,5 | 0 | 0 | 0 | 0 | 0 | 0 | 0 | 0 | 0 | 0,5 |
| **A5** | **33** | 0 | 3 | 0 | 3E-04 | 0 | 0 | 0 | 0 | 0 | 0 | 0 |
| **B5** | **34** | 0 | 3 | 0 | 0 | 3E-04 | 0 | 0 | 0 | 0 | 0 | 0 |
| **C5** | **35** | 0 | 3 | 0 | 0 | 0 | 3E-04 | 0 | 0 | 0 | 0 | 0 |
| **D6** | **36** | 0 | 3 | 0 | 0 | 0 | 0 | 3E-04 | 0 | 0 | 0 | 0 |
| **E5** | **37** | 0 | 3 | 0 | 0 | 0 | 0 | 0 | 3E-04 | 0 | 0 | 0 |
| **F5** | **38** | 0 | 3 | 0 | 0 | 0 | 0 | 0 | 0 | 3E-04 | 0 | 0 |
| **G5** | **39** | 0 | 3 | 0 | 0 | 0 | 0 | 0 | 0 | 0 | 3E-04 | 0 |
| **H5** | **40** | 0 | 3 | 0 | 0 | 0 | 0 | 0 | 0 | 0 | 0 | 3E-04 |
| **A6** | **41** | 0 | 2,97 | 0 | 0,03 | 0 | 0 | 0 | 0 | 0 | 0 | 0 |
| **B6** | **42** | 0 | 2,97 | 0 | 0 | 0,03 | 0 | 0 | 0 | 0 | 0 | 0 |
| **C6** | **43** | 0 | 2,97 | 0 | 0 | 0 | 0,03 | 0 | 0 | 0 | 0 | 0 |
| **D6** | **44** | 0 | 2,97 | 0 | 0 | 0 | 0 | 0,03 | 0 | 0 | 0 | 0 |
| **E6** | **45** | 0 | 2,97 | 0 | 0 | 0 | 0 | 0 | 0,03 | 0 | 0 | 0 |
| **F6** | **46** | 0 | 2,97 | 0 | 0 | 0 | 0 | 0 | 0 | 0,03 | 0 | 0 |
| **G6** | **47** | 0 | 2,97 | 0 | 0 | 0 | 0 | 0 | 0 | 0 | 0,03 | 0 |
| **H6** | **48** | 0 | 2,97 | 0 | 0 | 0 | 0 | 0 | 0 | 0 | 0 | 0,03 |
| **A7** | **49** | 0 | 2,7 | 0 | 0,3 | 0 | 0 | 0 | 0 | 0 | 0 | 0 |
| **B7** | **50** | 0 | 2,7 | 0 | 0 | 0,3 | 0 | 0 | 0 | 0 | 0 | 0 |
| **C7** | **51** | 0 | 2,7 | 0 | 0 | 0 | 0,3 | 0 | 0 | 0 | 0 | 0 |
| **D7** | **52** | 0 | 2,7 | 0 | 0 | 0 | 0 | 0,3 | 0 | 0 | 0 | 0 |
| **E7** | **53** | 0 | 0 | 0 | 0 | 0 | 0 | 0 | 0 | 0 | 0 | 0 |
| **F7** | **54** | 0 | 2,7 | 0 | 0 | 0 | 0 | 0 | 0 | 0,3 | 0 | 0 |
| **G7** | **55** | 0 | 2,7 | 0 | 0 | 0 | 0 | 0 | 0 | 0 | 0,3 | 0 |
| **H7** | **56** | 0 | 2,7 | 0 | 0 | 0 | 0 | 0 | 0 | 0 | 0 | 0,3 |
| **A8** | **57** | 0 | 2,5 | 0 | 0,5 | 0 | 0 | 0 | 0 | 0 | 0 | 0 |
| **B8** | **58** | 0 | 2,5 | 0 | 0 | 0,5 | 0 | 0 | 0 | 0 | 0 | 0 |
| **C8** | **59** | 0 | 2,5 | 0 | 0 | 0 | 0,5 | 0 | 0 | 0 | 0 | 0 |
| **D8** | **60** | 0 | 2,5 | 0 | 0 | 0 | 0 | 0 0,5 | 0 | 0 | 0 | 0 |
| **E8** | **61** | 0 | 2,5 | 0 | 0 | 0 | 0 | 0 | 0,5 | 0 | 0 | 0 |
| **F8** | **62** | 0 | 0 | 0 | 0 | 0 | 0 | 0 | 0 | 0,5 | 0 | 0 |
| **G8** | **63** | 0 | 2,5 | 0 | 0 | 0 | 0 | 0 | 0 | 0 | 0,5 | 0 |
| **H8** | **64** | 0 | 2,5 | 0 | 0 | 0 | 0 | 0 | 0 | 0 | 0 | 0,5 |
| **A9** | **65** | 0 | 0 | 3 | 3 3E-04 | 0 | 0 | 0 | 0 | 0 | 0 | 0 |
| **B9** | **66** | 0 | 0 | 3 | 0 | 3E-04 | 0 | 0 | 0 | 0 | 0 | 0 |
| **C9** | **67** | 0 | 0 | 3 | 0 | 0 | 3E-04 | 0 | 0 | 0 | 0 | 0 |
| **D9** | **68** | 0 | 0 | 3 | 0 | 0 | 0 | 3E-04 | 0 | 0 | 0 | 0 |
| **E9** | **69** | 0 | 0 | 3 | 0 | 0 | 0 | 0 | 3E-04 | 0 | 0 | 0 |
| **F9** | **70** | 0 | 0 | 3 | 0 | 0 | 0 | 0 | 0 | 3E-04 | 0 | 0 |
| **G9** | **71** | 0 | 0 | 3 | 0 | 0 | 0 | 0 | 0 | 0 | 3E-04 | 0 |
| **H9** | **72** | 0 | 0 | 3 | 0 | 0 | 0 | 0 | 0 | 0 | 0 | 3E-04 |
| **A10** | **73** | 0 | 0 | 2,97 | 0,03 | 0 | 0 | 0 | 0 | 0 | 0 | 0 |
| **B10** | **74** | 0 | 0 | 2,97 | 0 | 0,03 | 0 | 0 | 0 | 0 | 0 | 0 |
| **C10** | **75** | 0 | 0 | 2,97 | 0 | 0 | 0,03 | 0 | 0 | 0 | 0 | 0 |
| **D10** | **76** | 0 | 0 | 2,97 | 0 | 0 | 0 | 0,03 | 0 | 0 | 0 | 0 |
| **E10** | **77** | 0 | 0 | 2,97 | 0 | 0 | 0 | 0 | 0,03 | 0 | 0 | 0 |
| **F10** | **78** | 0 | 0 | 2,97 | 0 | 0 | 0 | 0 | 0 | 0,03 | 0 | 0 |
| **G10** | **79** | 0 | 0 | 2,97 | 0 | 0 | 0 | 0 | 0 | 0 | 0,03 | 0 |
| **H10** | **80** | 0 | 0 | 2,97 | 0 | 0 | 0 | 0 | 0 | 0 | 0 | 0,03 |
| **A11** | **81** | 0 | 0 | 2,7 | 0,3 | 0 | 0 | 0 | 0 | 0 | 0 | 0 |
| **B11** | **82** | 0 | 0 | 2,7 | 0 | 0,3 | 0 | 0 | 0 | 0 | 0 | 0 |
| **C11** | **83** | 0 | 0 | 2,7 | 0 | 0 | 0,3 | 0 | 0 | 0 | 0 | 0 |
| **D11** | **84** | 0 | 0 | 2,7 | 0 | 0 | 0 | 0 | 0,3 | 0 | 0 | 0 |
| **E11** | **85** | 0 | 0 | 2,7 | 0 | 0 | 0 | 0 | 0,3 | 0 | 0 | 0 |
| **F11** | **86** | 0 | 0 | 2,7 | 0 | 0 | 0 | 0 | 0 | 0,3 | 0 | 0 |
| **G11** | **87** | 0 | 0 | 2,7 | 0 | 0 | 0 | 0 | 0 | 0 | 0,3 | 0 |
| **H11** | **88** | 0 | 0 | 2,7 | 0 | 0 | 0 | 0 | 0 | 0 | 0 | 0,3 |
| **A12** | **89** | 0 | 0 | 2,5 | 0,5 | 0 | 0 | 0 | 0 | 0 | 0 | 0 |
| **B12** | **90** | 0 | 0 | 2,5 | 0 | 0,5 | 0 | 0 | 0 | 0 | 0 | 0 |
| **C12** | **91** | 0 | 0 | 2,5 | 0 | 0 | 0,5 | 0 | 0 | 0 | 0 | 0 |
| **D12** | **92** | 0 | 0 | 2,5 | 0 | 0 | 0 | 0,5 | 0 | 0 | 0 | 0 |
| **E12** | **93** | 0 | 0 | 2,5 | 0 | 0 | 0 | 0 | 0,5 | 0 | 0 | 0 |
| **F12** | **94** | 0 | 0 | 2,5 | 0 | 0 | 0 | 0 | 0 | 0,5 | 0 | 0 |
| **G12** | **95** | 0 | 0 | 0 | 0 | 0 | 0 | 0 | 0 | 0 | 0 | 0 |
| **H12** | **96** | 0 | 0 | 2,5 | 0 | 0 | 0 | 0 | 0 | 0 | 0 | 0,5 |

### List of references:

- 10: device in accordance with the invention
- 12: sensor carrier
- 14: micro sensor
- 16: infrared transparent window
- 18: heating element
- 20: casing
- 22: fluid inlet
- 24: fluid outlet
- 26: infrared camera
- 28: field of view of infrared camera
- 30: data processing facility
- 32: connection element
- 34: channel
- 36: section
- 38: upper part
- 40: lower part
- 42: multiport valve
- 44: test reactor
- 46: catalyst
- 48: waste-gas direction

## Claims

1. Method for the analysis of a fluid medium wherein the fluid medium is guided over at least two microsensors (14) of a sensor assembly, comprising at least two microsensors (14) being different, and wherein the at least two microsensors (14) are thermographically monitored with at least one detector with regard to a change of properties, wherein the change of properties of the at least two microsensors (14) is specific for at least one predetermined component of the fluid medium, **characterized in that** the evaluation is effected in accordance with a recognition of pattern in such a way that the detected measuring values are compared with pattern data banks and that, thereof, preferably automatically, identity and quantity of the at least one component in the fluid medium is determined.

2. Method in accordance with claim 1 wherein the signal transfer from the at least two microsensors (14) to the at least one detector is performed without any electrically conducting connection, in particular wireless.

3. Method in accordance with claim 1 or 2, wherein the at least one detector is an infrared camera (26) or an assembly of infrared diodes or a traverse-able infrared diode.

4. Method in accordance with one of the preceding claims wherein the change of properties is chosen from: thermoelectric effect, Peltier effect, Chelat effect, adsorption such as chemisorption and physisorption, desorption, catalytic reactions, formation of complexes, molecular recognition.

5. Use of the method in accordance with one of the claims 1 to 4 for detection of drugs, samples, explosives, combat means, pesticides, environmental poisons; for applications in the process control, quality control in the food, animal food, and cosmetics industries, in the field of forensics (forensic detection), in the securing of evidence; for chemical analysis with or without coupling with already-known analyzing methods; for olfactory tests in the consumer goods industry; for detecting mineral resources; in the extra-terrestrial research.

6. Device (10) for performing the method in accordance with one of the claims 1 to 4, comprising:
(1) means for receiving at least two individual microsensors (14) with or without a sensor carrier (12) with at least two different sections (36), separated from each other, for providing a sensor assembly,
(2) means for guiding in and out of at least one fluid medium into at least one section (36) of the sensor device with simultaneous contacting of the fluid medium with at least two microsensors (14),
(3) at least one detector for thermographic determination of at least one change of properties of the microsensors (14), as well as
(4) a data processing facility (30) which processes the sections (36) detected when measuring the at least one change of properties with the corresponding measuring values according to their position within the sensor carrier (12), **characterized in that** the data processing facility is programmed to evaluate the measuring values in accordance with pattern recognition, in such a way that the values are compared with pattern data bands and that thereof identity and quantity of at least one componant in the fluid is determined.

7. Device (10) in accordance with claim 6 **characterized in that** the means for receiving the at least two individual microsensors (14) and/or the at least two individual microsensors (14) are arbitrarily exchangeable.

8. Device (10) in accordance with claim 6 or 7, furthermore comprising a casing (20) wherein the sensor carrier (12) is provided.

9. Device (10) in accordance with one of the claims 6 to 8, wherein the device (10) comprises means for heating (18) and/or means for refrigerating of the casing (20) and/or the sensor carrier (12).

10. Device (10) in accordance with one of the claims 8 or 9, **characterized in that** the casing (20) comprises an infrared transparent window (16) and that the infrared detector is provided outside the casing (20) in front of the infrared transparent window (16).

11. Device (10) in accordance with one of the claims 8 to 10 **characterized in that** the casing (20) and/or the sensor carrier (12) consist completely or partially of silicon and/or sapphire or another appropriate material, transparent for infrared, or slate.

12. Device (10) in accordance with one of the claims 8 to 11 **characterized in that** the means for guiding in and out of the at least one fluid medium comprise channels (34) within the sensor carrier (12).

13. Device (10) in accordance with claim 12, **characterized in that** the channels (34) connect more than one section with one another (36).

14. Device (10) in accordance with one of the claims 8 to 13 further comprising at least one multiport valve (42) and/or a device for equal distribution of the fluid medium over at least one section of the sensor assembly.

15. Device according to any one of claims 6 - 14 wherein the composition of the microsensors (14) changes continuously or discontinuously.

16. Use of the method or the device (10) in accordance with one of the preceding claims for controlling chemical conversions.

## Patentansprüche

1. Verfahren zur Analyse eines fluiden Mediums, wobei das fluide Medium über mindestens zwei Mikrosensoren (14) einer Sensoranordnung geführt wird, die mindestens zwei Mikrosensoren (14) umfasst, die voneinander verschieden sind, und wobei die mindestens zwei Mikrosensoren (14) thermografisch mit mindestens einem Detektor bezüglich einer Änderung von Eigenschaften überwacht werden, wobei die Änderung der Eigenschaften der mindestens zwei Mikrosensoren (14) für mindestens eine vorbestimmte Komponente des fluiden Mediums spezifisch ist, **dadurch gekennzeichnet, dass** die Bewertung in Übereinstimmung mit einem Erkennungsmuster derart durchgeführt wird, dass die detektierten Messwerte mit Musterdatenbanken verglichen werden, und dass daraus, vorzugsweise automatisch, Identität und Quantität der mindestens einen Komponente im fluiden Medium bestimmt werden.

2. Verfahren nach Anspruch 1, wobei die Signalübertragung von den mindestens zwei Mikrosensoren (14) zum mindestens einen Detektor ohne jede elektrische Übertragungsverbindung durchgeführt wird, insbesondere drahtlos durchgeführt wird.

3. Verfahren nach Anspruch 1 oder 2, wobei der mindestens eine Detektor eine Infrarotkamera (26) oder eine Anordnung von Infrarotdioden oder eine schwenkbare Infrarotdiode ist.

4. Verfahren nach einem der vorstehenden Ansprüche, wobei der Wechsel von Eigenschaften ausgewählt wird aus: thermoelektrischer Effekt, Peltier-Effekt, Chelat-Effekt, Adsorption wie beispielsweise Chemisorption und Physisorption, Desorption, katalytische Reaktionen, Bildung von Komplexen, molekulare Erkennung.

5. Verwendung des Verfahrens nach einem der Ansprüche 1 bis 4 zur Detektion von Arzneimitteln, Proben, Explosivstoffen, Kampfmitteln, Pestiziden, Umweltgiften; für Anwendungen in der Verfahrenskontrolle, Qualitätskontrolle für Lebensmittel und tierische Nahrung, und in der kosmetischen Industrie, auf dem Gebiet der Forensik (forensische Detektion), in der Beweissicherung; für chemische Analyse mit oder ohne Kopplung mit bereits bekannten Analysemethoden; für olfaktorische Tests in der Verbrauchsgüterindustrie; zur Detektion mineralischer Ressourcen; in der extraterrestrischen Forschung.

6. Vorrichtung (10) zum Ausführen des Verfahrens nach einem der Ansprüche 1 bis 4, umfassend:
(1) Mittel zum Aufnehmen mindestens zweier individueller Mikrosensoren (14) mit oder ohne einem Sensorträger (12) mit mindestens zwei unterschiedlichen Abschnitten (36), welche voneinander getrennt sind, um eine Sensoranordnung zur Verfügung zu stellen,
(2) Mittel zum Ein- oder Herausführen mindestens eines fluiden Mediums in mindestens einen Abschnitt (36) der Sensorvorrichtung unter gleichzeitiger Kontaktierung des fluiden Mediums mit mindestens zwei Mikrosensoren (14),
(3) mindestens ein Detektor für die thermografische Bestimmung mindestens eines Wechsels von Eigenschaften der Mikrosensoren (14), und
(4) eine Datenverarbeitungseinrichtung (30), welche die detektierten Abschnitte (36) bearbeitet, wenn der mindestens eine Wechsel an Eigenschaften mit den entsprechenden Messwerten gemäß ihrer Position innerhalb des Sensorträgers (12) gemessen wird, **dadurch gekennzeichnet, dass** die Datenverarbeitungseinrichtung so programmiert ist, dass sie die Messwerte gemäß ihres Erkennungsmusters bewertet, derart, dass die Werte mit Musterdatenbanken verglichen werden, und dass daraus Identität und Quantität mindestens einer Komponente im Fluid bestimmt werden.

7. Vorrichtung (10) nach Anspruch 6, **dadurch gekennzeichnet, dass** die Mittel zum Aufnehmen der mindestens zwei individuellen Mikrosensoren (14) und/oder die mindestens zwei individuellen Mikrosensoren (14) beliebig austauschbar sind.

8. Vorrichtung (10) nach Anspruch 6 oder 7, weiter umfassend ein Gehäuse (20), worin der Sensorträger (12) vorgesehen ist.

9. Vorrichtung (10) nach einem der Ansprüche 6 bis 8, wobei die Vorrichtung (10) Mittel zum Heizen (18) und/oder Mittel zum Kühlen des Gehäuses (20) und/oder des Sensorträgers (12) umfasst.

10. Vorrichtung (10) nach einem der Ansprüche 8 oder 9, **dadurch gekennzeichnet, dass** das Gehäuse (20) ein für Infrarotstrahlung durchlässiges Fenster (16) umfasst, und dass der Infrarotdetektor außerhalb des Gehäuses (20) vor dem für Infrarotstrahlung durchlässigen Fenster (16) vorgesehen ist.

11. Vorrichtung (10) nach einem der Ansprüche 8 bis 10, **dadurch gekennzeichnet, dass** das Gehäuse (20) und/oder der Sensorträger (12) vollständig oder teilweise aus Silizium und/oder Saphir oder einem anderen geeigneten Material besteht, welches für Infrarotstrahlung durchlässig ist, oder aus Schiefer besteht.

12. Vorrichtung (10) nach einem der Ansprüche 8 bis 11, **dadurch gekennzeichnet, dass** die Mittel zum Hinein- oder Herausführen des mindestens einen fluiden Mediums Kanäle (34) innerhalb des Sensorträgers (12) umfassen.

13. Vorrichtung (10) nach Anspruch 12, **dadurch gekennzeichnet, dass** die Kanäle (34) mehr als einen Abschnitt (36) miteinander verbinden.

14. Vorrichtung (10) nach einem der Ansprüche 8 bis 13, weiter umfassend mindestens ein Multiportventil (42) und/oder eine Vorrichtung zur Gleichverteilung des fluiden Mediums über mindestens einen Abschnitt der Sensoranordnung.

15. Vorrichtung nach einem der Ansprüche 6 bis 14, wobei die Zusammensetzung der Mikrosensoren (14) sich kontinuierlich oder diskontinuierlich ändert.

16. Verwendung des Verfahrens oder der Vorrichtung (10) nach einem der vorstehenden Ansprüche zur Steuerung chemischer Umwandlungen.

## Revendications

1. Procédé pour l'analyse d'un milieu fluide dans lequel le milieu fluide est guidé par-dessus au moins deux micro-capteurs (14) d'un assemblage de capteurs, comprenant au moins deux micro-capteurs (14) ayant la propriété d'être différents, et dans lequel les au moins deux micro-capteurs (14) sont thermographiquement contrôlés au moyen d'au moins un détecteur en ce qui concerne un changement de propriétés, où le changement de propriétés des au moins deux micro-capteurs (14) est spécifique pour au moins un composant prédéterminé du milieu fluide, **caractérisé en ce que** l'évaluation est effectuée selon une reconnaissance de motif de telle manière que les valeurs de mesure détectées sont comparées avec des banques de données de motifs et que, à partir de là, de préférence automatiquement, l'identité et la quantité de l'au moins un composant dans le milieu fluide sont déterminées.

2. Procédé selon la revendication 1, dans lequel le transfert de signal à partir des au moins deux micro-capteurs (14) à destination de l'au moins un détecteur est effectué sans aucune connexion à conduction électrique, en particulier sans fil.

3. Procédé selon la revendication 1 ou 2, dans lequel l'au moins un détecteur est une caméra infrarouge (26) ou un ensemble de diodes infrarouges ou une diode infrarouge traversable.

4. Procédé selon l'une quelconque des revendications précédentes dans lequel le changement de propriétés est choisi parmi les possibilités suivantes : effet thermoélectrique, effet Peltier, effet Chelat, adsorption telle que chimisorption et physisorption, désorption, réactions catalytiques, formation de complexes, reconnaissance moléculaire.

5. Procédé selon l'une quelconque des revendications 1 à 4 destiné à la détection de drogues, d'échantillons, d'explosifs, de moyens de combat, de pesticides, de poisons écologiques ; à des applications dans le contrôle de processus, le contrôle de qualité dans la nourriture, l'alimentation animale et l'industrie cosmétique, dans le domaine de la criminalistique (expertise médicolégale), dans la collecte de preuves ; à une analyse chimique avec ou sans association à des procédés d'analyse déjà connus ; à des essais olfactifs dans l'industrie des biens de consommation courante ; à la détection de ressources minérales ; à la recherche extraterrestre.

6. Dispositif (10) pour exécuter le procédé selon l'une quelconque des revendications 1 à 4, comprenant :
1) des moyens pour recevoir au moins deux micro-capteurs (14) individuels avec ou sans porte-capteur (12) avec au moins deux sections (36) différentes, séparés l'un de l'autre, pour constituer un assemblage de capteurs,
2) des moyens pour guider au sein et en dehors d'au moins un milieu fluide au moins une section (36) du dispositif de détection avec une mise en contact simultanée du milieu fluide avec au moins deux micro-capteurs (14),
3) au moins un détecteur pour déterminer de façon thermographique au moins un changement de propriétés des micro-capteurs (14), et
4) un équipement de traitement de données (30) qui traite les sections (36) détectées lors d'une mesure d'au moins un changement de propriétés avec les valeurs de mesure correspondantes selon leur position au sein du porte-capteur (12), **caractérisé en ce que** l'équipement de traitement de données est programmé pour évaluer les valeurs de mesure selon une reconnaissance de motif, de telle manière que les valeurs sont comparées avec les banques de données de motifs et qu'à partir de là, l'identité et la quantité d'au moins un composant du fluide sont déterminées.

7. Dispositif (10) selon la revendication 6 **caractérisé en ce que** les moyens de réception des au moins deux micro-capteurs (14) individuels et/ou des au moins deux micro-capteurs (14) individuels sont arbitrairement interchangeables.

8. Dispositif (10) selon l'une des revendications 6 ou 7, comprenant en outre un boîtier (20) où le porte-capteur (12) est ménagé.

9. Dispositif (10) selon l'une quelconque des revendications 6 à 8, dans lequel le dispositif (10) comprend un moyen de chauffage (18) et/ou un moyen de réfrigération du boîtier (20) et/ou du porte-capteur (12).

10. Dispositif (10) selon l'une quelconque des revendications 8 ou 9, **caractérisé en ce que** le boîtier (20) comporte une fenêtre perméable aux infrarouges (16) et que le détecteur infrarouge est ménagé à l'extérieur du boîtier (20) en face de la fenêtre perméable aux infrarouges (16).

11. Dispositif (10) selon l'une quelconque des revendications 8 à 10 **caractérisé en ce que** le boîtier (20) et/ou le porte-capteur (12) sont constitués complètement ou partiellement de silicium et/ou de saphir ou d'un autre matériau approprié, perméable aux infrarouges, ou d'ardoise.

12. Dispositif (10) selon l'une quelconque des revendications 8 à 11 **caractérisé en ce que** les moyens de guidage au sein et en dehors d'au moins un milieu fluide comprennent des canaux (34) au sein du porte-capteur (12).

13. Dispositif (10) selon la revendication 12, **caractérisé en ce que** les canaux (34) connectent plus d'une section l'une avec l'autre (36).

14. Dispositif (10) selon l'une quelconque des revendications 8 à 13 comprenant en outre au moins un robinet multivoies (42) et/ou un dispositif permettant une distribution égale du milieu fluide dans la totalité d'au moins une section de l'ensemble de capteur.

15. Dispositif selon l'une quelconque des revendications 6 à 14 dans lequel la composition des micro-capteurs (14) change de manière continue ou discontinue.

16. Utilisation du procédé ou du dispositif (10) selon l'une quelconque des revendications précédentes pour contrôler des conversions chimiques.
